# EUROPEAN PATENT SPECIFICATION

(11) **EP 3 869 339 B1**
(45) Date of publication and mention of the grant of the patent: **10.05.2023**
(21) Application number: 21157675.6
(22) Date of filing: 17.02.2021
(51) Int. Cl.: G06F 11/14, G06F 16/23, G06F 16/27, H04L 9/00, H04L 9/32

(54) **DATA STORAGE METHOD AND APPARATUS FOR BLOCKCHAIN, DEVICE, AND MEDIUM**
DATENSPEICHERVERFAHREN UND -EINRICHTUNG FÜR BLOCKCHAIN, VORRICHTUNG UND MEDIUM
PROCÉDÉ DE STOCKAGE DE DONNÉES ET APPAREIL DE CHAÎNE DE BLOCS, DISPOSITIF ET SUPPORT

(30) Priority: 20.02.2020 CN 202010106770
(43) Date of publication of application: 25.08.2021
(73) Proprietor: BAIDU ONLINE NETWORK TECHNOLOGY (BEIJING) CO., LTD., Beijing 100085 (CN)
(72) Inventor: Xiao, Wei, Beijing, 100085 (CN)
(74) Representative: Lucke, Andreas

(56) References cited:
- CN-A- 109 300 036
- CN-A- 109 684 307
- CN-A- 109 710 190
- CN-A- 110 493 325
- US-A1- 2019 018 888

## Description

### TECHNICAL FIELD

Embodiments of the present disclosure relate to the field of computer technology, and specifically to a data storage method and apparatus for a blockchain, an electronic device and a non-transitory computer readable storage medium.

### BACKGROUND

A blockchain system is a decentralized storage system. Each distributed node needs to process a transaction request and store data. In order to query the data more conveniently, the node would locally store the data affected by the transaction request processed on a blockchain. As a new transaction request occurs in the blockchain, the local data is continually updated.

A fork phenomenon may also occurs in the blockchain. That is, for different nodes, the blocks subsequently generated starting from a certain block are inconsistent, that is, a fork is formed. The fork may continue to several blocks. The blockchain system has a corresponding mechanism to solve the fork problem, that is, periodically check whether there is a fork. If there is a fork, according to a rule, it is determined that one branch is correct and the other branch is wrong. The node would delete the wrong branch and synchronously acquires the blocks of the correct branch from other nodes, thereby solving the fork problem.

However, for the local data of the node, the rollback of the transaction requests of the wrong branch significantly affects the local data. Existing local data storage techniques do not perform well when dealing with the fork.

Patent application CN109710190A discloses a data storage method, device and equipment and a storage medium. In CN109710190A, the disclosed method includes: obtaining a data processing request; determining a current version identifier according to the data processing request; determining a target key value pair for processing data according to the data processing request, and processing the data in the value domain of the target key value pair; and writing the newly generated target key value pair into a memory storage space, the key domain of the key value pair in the memory storage space storing a key identifier and a version identifier, and the version identifier in the key domain of the newly generated target key value pair being a current version identifier.

Patent application CN109300036A discloses a bifurcation regression method and apparatus for block chain network. In CN109300036A, the disclosed method includes: when detecting that a current block is on a forked chain of a block chain network, obtaining an identification of a starting block of the forked chain starting to fork from a backbone chain of the block chain network; when the current block is detected to be on a forked chain of the block chain network, obtaining an identification of a starting block of the forked chain starting to fork from a backbone chain of the block chain network; Searching snapshot information of the starting block according to the identification of the starting block; Using the snapshot information of the starting block, the state variable in the current block is returned to the state variable of the starting block.

Patent application CN109684307A discloses a data storage method, device and equipment and storage medium. In CN109684307A, the disclosed method includes: obtaining a data processing request; Determining a current version identifier according to the data processing request; Determining a target key value pair for processing data according to the data processing request, and processing the data in the value domain of the target key value pair; Writing the newly generated target key value pair into a storage space, storing a key identifier and a version identifier in a key domain of the key value pair in the storage space, and taking the version identifier in the key domain of the newly generated target key value pair as a current version identifier.

Patent application CN110493325A discloses a block chain state data synchronization method and apparatus, and electronic device. In CN110493325A, account state data in a block chain is organized into a Merkle state tree to be stored in a database; wherein the Merkle state tree comprises a current Merkle state tree organized by the latest account state of each block chain account, and the historical Merkle state tree formed by organizing the historical account states of the block chain accounts. The method comprises the following steps: receiving a data synchronization instruction for the Merkle state tree; in response to the data synchronization instruction, obtaining a current Merkle state tree of a latest block stored in a database of other node devices in the block chain in real time; and storing the obtained current Merkle state tree of the latest block into a local database so as to complete real-time data synchronization for the Merkle state tree.

Patent application US 2019/018888 A1 discloses a method and System for tuning blockchain scalability, decentralization, and security for fast and low-cost payment and transaction processing. In US 2019/018888 A1, the disclosed method for sharing data between blockchains in a multi-chain network includes: accessing a first block on a first blockchain of a multi-chain network, generating a cryptographic hash from the first block, defining a first anchor hash, recording the first anchor hash to a second block on a second blockchain of a multi-chain network, receiving a plurality of account addresses associated with the first and second blockchains and an account state for each account associated with the plurality of account addresses, a plurality of transactions, and a plurality of transaction receipts, generating a world state trie comprising a mapping between the first plurality of account addresses and the account states, a transactions trie comprising the plurality of transactions, and a transaction receipts trie comprising the plurality of transactions receipts, and root hashes thereof, and recording the root hashes to each block of the first and second blockchains.

### SUMMARY

Embodiments of the present disclosure discloses a data storage method and apparatus for a blockchain, a device and a medium, to improve the performance of local data storage in response to a fork processing mechanism.

In a firs aspect, an embodiment of the present disclosure provides a data storage method for a blockchain, performed by a blockchain node, wherein data affected by transaction requests processed on the blockchain are locally stored, the method including: in a process of executing transaction requests of a current block, updating a world tree of local data, wherein data objects are stored through a tree structure, according to write data in an execution result of a transaction request to generate a new data point and a new world tree root, the new data point being an entity data point or a patch data point of an existing entity data point, wherein the entity data point directly points to an actual value of a data object, and the patch data point records an update operation based on an existing entity data point; storing the new world tree root corresponding to the current block; and in response to determining that an existing block becomes a current snapshot block satisfying a snapshot condition according to a probability of a fork for the current snapshot block, updating a world tree of the current snapshot block to a snapshot world tree according to transaction requests between a previous snapshot block and the current snapshot block, such that data objects of the snapshot block and all blocks before the snapshot block are finally updated, and the world tree of local data comprises the snapshot world tree and, for blocks after the current snapshot block, a plurality of word tree roots comprising new patch data points, where a data point of the snapshot world tree is an entity data point which directly points to an actual value of a data object, and where determining that an existing block becomes a current snapshot block satisfying a snapshot condition according to a probability of a fork for the current snapshot block includes: determining a block having a block interval from the previous snapshot block as the current snapshot block according to a set snapshot block interval, the block interval from the previous snapshot block reaching the snapshot block interval, the snapshot block interval being a longest fork interval allowed by a consensus algorithm of the blockchain.

In the technical solution of the embodiment of the present disclosure, a snapshot storage approach and a world tree storage approach are combined. In design for a blockchain, a fork can be quickly recovered. It is impossible that a block that cannot be determined for a long time exists. That is, from the point of view of business, it is not allowed to fork a block long time ago, because it would cause the business to be in an uncertain state. Therefore, according to the technical solution of the embodiment of the present disclosure, a storage architecture in which two advantages are mixed is designed. In the architecture, the snapshot storage approach is used for historical data and the world tree storage approach is used for the newest data, and thus, the advantages of the two approaches can be combined. Therefore, the storage space is saved, and the data can be quickly adjusted when an unstable block needs a rollback.

Alternatively, the updating the world tree of local data according to write data in the execution result of the transaction request to generate the new data point and the new world tree root includes: in response to the write data in the execution result of the transaction request referring to a new addition for a data object, adding newly an entity data point based on a world tree of a previous block, and storing correspondingly a data value of the newly added data object; in response to the write data in the execution result of the transaction request referring to an update for a data value of an existing data object, adding a patch data point to a data point of the existing data object based on the world tree of the previous block, and recording the updated data value; in response to the write data in the transaction request execution result referring to a deletion for the data value of the existing data object, adding a patch data point to the data point of the existing data object based on the world tree of the previous block, and recording the deletion for the data value; and performing an update to generate a corresponding upper-level data point and a corresponding world tree root, according to the newly added entity data point or the patch data point.

Alternatively, the updating the world tree of the current snapshot block to the snapshot world tree according to transaction requests between the previous snapshot block and the current snapshot block includes: executing sequentially transaction requests from the previous snapshot block to the current snapshot block one by one; and in the process of executing the transaction requests one by one, according to write data in the execution result of the transaction request, updating a data value corresponding to an entity data point and deleting a corresponding patch data point based on a snapshot world tree corresponding to the previous snapshot block, until the snapshot world tree of the current snapshot block is generated.

Alternatively, after updating the world tree of the current snapshot block to the snapshot world tree, the method further includes: updating a patch data point of a world tree of a block after the current snapshot block, to point to an entity data point of the current snapshot world tree.

Alternatively, the method further includes: acquiring, from another node, at least one synchronization block, the synchronization block being connected to an existing block in a locally stored blockchain, the existing block being used as a previous block of the synchronization block.

Alternatively, the method further includes: in response to a data access operation for the synchronization block occurring, updating a world tree of local data according to the synchronization block to generate a new data point and a new world tree root.

Alternatively, the updating the world tree of local data according to the synchronization block includes: in response to the previous block being located after a newest snapshot block, constructing, according to a data point of a world tree recorded in the synchronization block, the world tree of the synchronization block based on an existing world tree of the local data; and in response to the previous block being located before the newest snapshot block, executing transaction requests from back to front one by one from the newest snapshot block to the previous block, performing an undo update on a snapshot world tree corresponding to the newest snapshot block according to write data in an execution result of a transaction request, and constructing, according to the data point of the world tree recorded in the synchronization block, the world tree of the synchronization block based on the snapshot world tree after the undo update.

An embodiment of the present disclosure has the following advantages or beneficial effects: the local data can be updated according to the access for the synchronization block while the synchronization block is acquired, which takes account of the synchronization speed and the access response of the local data.

Alternatively, the method further includes: in response to that a fork rollback occurs, and a height of a block having a fork point is greater than or equal to a height of the newest snapshot block, switching the world tree root of the local data to a world tree root of a correct block branch; and in response to that the fork rollback occurs, and the height of the block having the fork point is less than the height of the newest snapshot block, executing transaction requests of a wrong fork block between the newest snapshot block and the fork point one by one from back to front, performing an undo update on the snapshot world tree corresponding to the newest snapshot block according to write data in an execution result of a transaction request; executing, starting from the fork point, transaction requests of a correct fork block one by one, and updating the snapshot world tree after the undo update according to write data in an execution result of a transaction request.

Alternatively, the updating the snapshot world tree after the undo update according to write data in the execution result of the transaction request includes: updating, according to the write data in the execution result of the transaction request, the snapshot world tree after the undo update until to a location of the newest snapshot block or a newest block, and reserving the snapshot world tree.

An embodiment of the present disclosure has the following advantages or beneficial effects: according to the technology in the embodiment of the present disclosure, a part of world trees are reserved based on the snapshot world tree, the part of world trees are world trees having a high probability that the fork rollback occurs, and the world tree roots can be quickly switched when the fork occurs in the part of world trees, thus completing the processing for the local data. If the fork point is before the snapshot world tree, it is only required to repeat a small number of rollbacks to complete the update for the local data.

Alternatively, the method further includes: in the process of executing the transaction requests of the current block, storing sequentially data of the transaction requests into the local data in units of blocks.

An embodiment of the present disclosure has the following advantages or beneficial effects: the hybrid storage mode is implemented in the local data. For stable previous blocks having a low fork probability, the data is stored using a consecutive block storage approach of the transaction requests, and for subsequent blocks having a high fork probability, the data is stored using a local storage approach of the world trees. Such a hybrid storage approach can reduce the storage space occupied by the local data, and can also quickly update the data when a rollback occurs.

Alternatively, after updating the world tree of the current snapshot block to the snapshot world tree, the method further includes: deleting a world tree corresponding to a block before the current snapshot block.

In a second aspect, an embodiment of the present disclosure provides a data storage apparatus for a blockchain, configured in a blockchain node, wherein data affected by transaction requests processed on the blockchain are locally stored, the apparatus including: a world tree updating module, configured to, in a process of executing transaction requests of a current block, update a world tree of local data, wherein data objects are stored through a tree structure, according to write data in an execution result of a transaction request to generate a new data point and a new world tree root, the new data point being an entity data point or a patch data point of an existing entity data point, wherein the entity data point directly points to an actual value of a data object, and the patch data point records an update operation based on an existing entity data point; a root storing module, configured to store the new world tree root corresponding to the current block; and a snapshot updating module, configured to, in response to determining that an existing block becomes a current snapshot block satisfying a snapshot condition according to a probability of a fork for the current snapshot block, update a world tree of the current snapshot block to a snapshot world tree according to transaction requests between a previous snapshot block and the current snapshot block, such that data objects of the snapshot block and all blocks before the snapshot block are finally updated, and the world tree of local data comprises the snapshot world tree and, for blocks after the current snapshot block, a plurality of word tree roots comprising new patch data points, wherein a data point of the snapshot world tree is an entity data point which directly points to an actual value of a data object, and where determining that an existing block becomes a current snapshot block satisfying a snapshot condition according to a probability of a fork for the current snapshot block includes: determining a block having a block interval from the previous snapshot block as the current snapshot block according to a set snapshot block interval, the block interval from the previous snapshot block reaching the snapshot block interval, the snapshot block interval being a longest fork interval allowed by a consensus algorithm of the blockchain.

In a third aspect, an embodiment of the present disclosure provides an electronic device, including: at least one processor; and a memory, communicatively connected with the at least one processor, where the memory stores an instruction executable by the at least one processor, and the instruction when executed by the at least one processor, causes the at least one processor to perform the data storage method according to the first aspect of the present disclosure.

In a fourth aspect, an embodiment of the present disclosure provides a non-transitory computer readable storage medium, storing a computer instruction, where the computer instruction is used to cause a computer to perform the data storage method according to the first aspect of the present disclosure.

Other effects of the above alternative implementations will be described hereinafter in combination with specific embodiments.

### BRIEF DESCRIPTION OF THE DRAWINGS

Accompanying drawings are used for a better understanding of the solution, and do not constitute a limitation to the present disclosure.
Fig. 1A is a flowchart of a data storage method for a blockchain provided in a first embodiment of the present disclosure;
Fig. 1B is a first schematic diagram of a world tree of a blockchain to which embodiments of the present disclosure is applicable;
Fig. 1C is a first schematic diagram of storage of transaction requests of the blockchain to which embodiments of the present disclosure is applicable;
Fig. 2A is a flowchart of a data storage method for a blockchain provided in a second embodiment of the present disclosure;
Fig. 2B is a first schematic diagram of a synchronization blockchain to which embodiments of the present disclosure is applicable;
Fig. 2C is a second schematic diagram of the synchronization blockchain to which embodiments of the present disclosure is applicable;
Fig. 3A is a flowchart of a data storage method for a blockchain provided in a third embodiment of the present disclosure;
Fig. 3B is a first schematic diagram of a fork of the blockchain to which embodiments of the present disclosure is applicable;
Fig. 3C is a second schematic diagram of the fork of the blockchain to which embodiments of the present disclosure is applicable;
Fig. 4A is a flowchart of a data storage method for a blockchain provided in a fourth embodiment of the present disclosure;
Fig. 4B is a second schematic diagram of the world tree of the blockchain to which embodiments of the present disclosure is applicable;
Fig. 5 is a block diagram of an data storage apparatus for a blockchain provided in a fifth embodiment of the present disclosure; and
Fig. 6 is a block diagram of an electronic device adapted to implement the data storage method for a blockchain according to embodiments of the present disclosure.

### DETAILED DESCRIPTION OF EMBODIMENTS

Example embodiments of the present disclosure are described below in combination with the accompanying drawings, and various details of embodiments of the present disclosure are included in the description to facilitate understanding, and should be considered as exemplary only. Also, for clarity and conciseness, descriptions for well-known functions and structures are omitted in the following description.

### First Embodiment

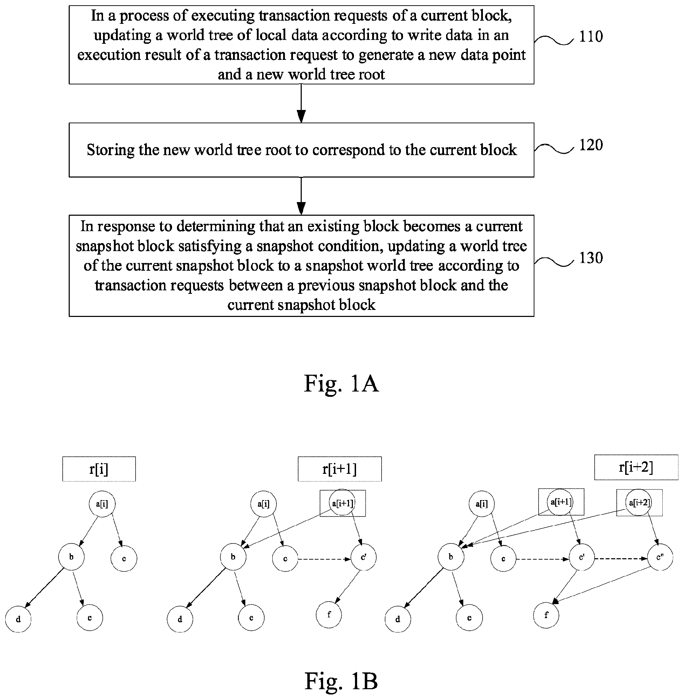

Fig. 1A is a flowchart of a data storage method for a blockchain provided in the first embodiment of the present disclosure. The method in this embodiment is applicable to a situation where a blockchain node stores data locally. In the process of running a blockchain, many transaction requests performing various functions are initiated. The transaction requests are executed by the node to form transaction data to be packaged into blocks, and the blocks are sequentially connected, thereby forming the blockchain. The blocks are recorded by all nodes in a blockchain network, and thus, tampering can be prevented.

In addition to storing the transaction data in the blockchain, generally the transaction data may also be stored locally by the nodes. For example, more abundant and flexible data query services may be provided for the user. Local data is data generated according to a transaction request in a block and an execution result thereof.

The local data storage approach used by nodes may be different based on an actually different data access need. Although the storage of the local data of the node is convenient for local use, a large amount of adjustment may be caused when a rollback is required due to a fork of a blockchain. The scheme proposes a solution to this technical problem, and provides a hybrid storage scheme in which a world tree storage approach and a snapshot storage approach are combined.

The method in this embodiment may be performed by an apparatus for storing data, configured in the blockchain node. The apparatus may be implemented by means of software and/or hardware.

Specifically, referring to Fig. 1A, the method in this embodiment includes the following steps.

S110, in a process of executing transaction requests of a current block, updating a world tree of local data according to write data in an execution result of a transaction request to generate a new data point and a new world tree root, the new data point being an entity data point or a patch data point of an existing entity data point.

In the above operation, in the process of executing a plurality of transaction requests of the current block by the node, an execution result of each transaction request may be determined, and the execution result generally includes read data and/or write data. The so-called read data refers to a read operation of the transaction request, which is an operation of reading a data value in an existing data object. The write data refers to a change or delete operation of the transaction request, which is an operation of changing or deleting the data value of the existing data object, and may also include an operation of newly adding a data object.

The world tree of the local data needs to be updated, according to the write data in the execution result. The so-called world tree refers to that a data object is stored through a tree structure. A data point in the tree corresponds to a data object, and may store the data object directly, or point to the storage location of the data object. In the tree, an upper-level data point points to a lower-level data point, which indicates that the upper-level data point stores a pointer pointing to the lower-level data point. A tree index algorithm may be used to realize in what order all data objects construct the tree structure, which is not limited in embodiments of the present disclosure.

As shown in Fig. 1B, Fig. 1B exemplarily shows world trees of blocks r[i], r[i+1] and r[i+2], where i is an integer greater than or equal to 0. In the example of this blockchain, the block r[i] is the newest snapshot block, which corresponds to the snapshot world tree having the root a[i]. The block r[i+2] is the block currently being executed, and the blocks r[i+1] and r[i+2] are respectively updated based on the world tree of the previous block, to obtain the ordinary world tree having the root a[i+1] and the ordinary world tree having the root a[i+2].

The data point in the snapshot world tree of the root a[i] is an entity data point, i.e., directly pointing to the actual value of a data object. The data point in the ordinary world tree may be an entity data point, and typically also includes a patch data point. The patch data point records an update operation based on an existing entity data point, and does not point to the actual value of a data object. For example, the patch data point records that an existing data object is deleted or a certain value thereof is replaced. The pointer of the updated existing entity data point is recorded in the patch data point. Thus, the patch data point can point to the actual value of the data object only when in combination with the entity data point.

The updating operation of S110 is described using the example of Fig. 1B, and may be specifically as follows.

If the write data in the execution result of the transaction request refers to a new addition for a data object, an entity data point is newly added based on the world tree of the previous block, and the data value of the newly added data object is correspondingly stored. As shown in Fig. 1B, in the execution result of the block r[i+1], a value change is performed on the data object to which the data point c points, and thus, the patch data point c' is generated to point to the entity data point c. Similarly, when the transaction request of the block r[i+2] is executed and the data objects to which the data points c and c' point are updated, the patch data point c" is generated.

If the write data in the execution result of the transaction request refers to an update for a data value of an existing data object, a patch data point is added to a data point of the existing data object based on the world tree of the previous block, and the updated data value is recorded. For example, the entity data point f of the data object is newly added in the execution result of the block r[i+1].

If the write data in the transaction request execution result refers to a deletion for the data value of the existing data object, a patch data point is added to the data point of the existing data object based on the world tree of the previous block, and the deletion for the data value is recorded. For example, if an operation on the data object to which the data point c points in the block r[i+2] is a delete operation, a delete identifier or a null data value is recorded in the patch data point c".

According to the newly added entity data point or the patch data point, an update is performed to generate a corresponding upper-level data point and a corresponding world tree root. For example, since the patch data point c' is added, in the root a[i], the pointer pointing to the data point c needs to be changed to point to the data point c'. Thus, the world tree root a[i] is updated to the world tree root a[i+1]. Similarly, after the block r[i+2] is executed, the world tree root is updated to the root a[i+2]. If there are other upper-level data points between the updated data point and the root, the pointer also needs to be correspondingly updated.

The update for the world tree caused by the update operation on the data object is not limited to the above approach, and the update approach may be determined according to the construction approach of the world tree. The function of the world tree is to record the historical change states of all data objects. Moreover, the data values of all data objects in a certain state can be indexed through different world tree roots.

S120, storing the new world tree root to correspond to the current block.

The world tree root corresponding to the current block is correspondingly stored, such that when it is required to learn the data value of a data object in a certain block, indexing is only required to be performed according to the corresponding world tree root. In the block, the newly added data point of the world tree of the current block, including the patch data point and the newly added entity data point, may be stored based on the world tree of the previous block, so as to store the root of the current world tree.

S130, in response to determining that an existing block becomes a current snapshot block satisfying a snapshot condition, updating a world tree of the current snapshot block to a snapshot world tree according to transaction requests between a previous snapshot block and the current snapshot block, where a data point of the snapshot world tree is an entity data point.

In this embodiment, a certain block is formed with a snapshot world tree, and the snapshot world tree corresponds to an entity data point. That is, data objects of the snapshot block and all blocks before the snapshot block are finally updated, and made to correspond to the snapshot world tree, and thus, there is only one world tree root. The blocks after the snapshot block are updated one by one to generate new patch data points, and thus, there are a plurality of world tree roots. If all the blocks are stored in the form of updating the world trees, although the data states of all the blocks may be recorded, a large amount of storage space would be occupied, and the amount of calculation for the storage and the update each time is large. With the increasing number of blocks, the storage performance is poor. According to the technical solution of this embodiment, the newest snapshot world tree is continuously adjusted to clean the memory.

In this embodiment, determining whether a certain existing block is stored and becomes the current snapshot block satisfying the snapshot condition. If yes, the world tree of the current snapshot block is updated to the snapshot world tree according to the transaction request between the previous snapshot block and the current snapshot block. That is, the snapshot world tree is continuously pushed backwards, and the world tree corresponding to the block before the current snapshot block may be reserved or deleted. Preferably, the deletion is performed, and thus, a large amount of storage space may be released. If the reservation is only performed, the amount of calculation for the subsequent update of the world tree is reduced due to the optimization of the snapshot world tree.

The generation of the snapshot world tree may be implemented in a plurality of ways as long as the data values that can reflect all the data objects at the snapshot block can be stored, which will be described in detail through the following embodiments.

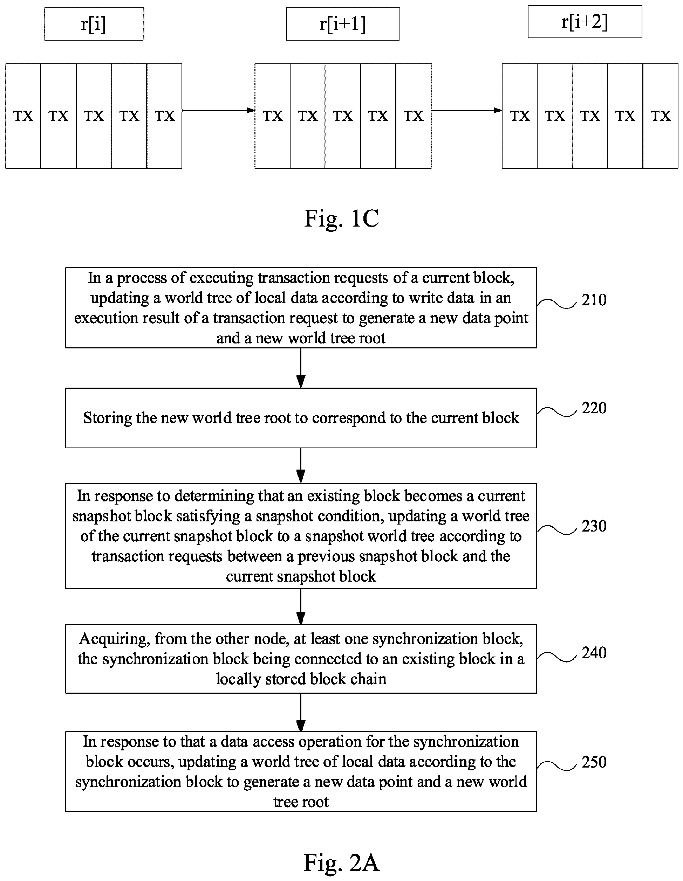

The local data before the snapshot block is stored in the form of snapshot world tree. Preferably, during the execution for the transaction requests of the current block, the transaction requests are further sequentially stored into the local data in units of blocks. As shown in Fig. 1C, the data (TX) of the transaction requests corresponding to the blocks r[i], r[i+1] and r[i+2] is stored in units of blocks. The data of the transaction request of a block before the block r[i] may be stored locally.

According to the technical solution of this embodiment, the world tree storage scheme is partially used to constitute the hybrid storage approach. Thus, all the world tree states of a part of blocks are reserved, which facilitates querying the states at any time. In addition, previous blocks are adjusted to the snapshot state, thereby reducing the amount of data storage. The above storage solution is particularly advantageous when the fork occurs. When the fork occurs, the world tree of a certain block can be quickly rolled back to. There is also no need to reserve a large number of world trees in the previous blocks in which the fork does not occur.

### Second Embodiment

Fig. 2A is a flowchart of a data storage method for a blockchain provided in the second embodiment of the present disclosure. In this embodiment, a processing approach when synchronization occurs in a blockchain is specifically introduced based on the aforementioned storage scheme.

In a blockchain network, a synchronization block synchronized to a native node by other nodes is obtained for various reasons. The synchronization block is a block existing or not existing in the native node, and may be one block or a plurality of blocks of one branch.

As shown in Fig. 2A, the method in this embodiment includes the following steps.
S210, in a process of executing transaction requests of a current block, updating a world tree of local data according to write data in an execution result of a transaction request to generate a new data point and a new world tree root, the new data point being an entity data point or a patch data point of an existing entity data point.
S220, storing the new world tree root to correspond to the current block;
S230, in response to determining that an existing block becomes a current snapshot block satisfying a snapshot condition, updating a world tree of the current snapshot block to a snapshot world tree according to transaction requests between a previous snapshot block and the current snapshot block, a data point of the snapshot world tree being an entity data point; and
S240, acquiring, from the other node, at least one synchronization block, the synchronization block being connected to an existing block in a locally stored blockchain, the existing block being used as a previous block of the synchronization block.

It may be appreciated by those skilled in the art that the timing of acquiring the synchronization block may be achieved during, before or after any of the above steps, and that the timing of acquiring the synchronization block is not strictly limited.

The synchronization block is generally associated with the existing blockchain of a local node. If the synchronization block is completely irrelevant to the existing blockchain, the synchronization block belongs to a completely different blockchain from the existing blockchain. The synchronization block is generally generated by branching from a certain block in the existing blockchain, and the branched block is the previous block of the synchronization block.

S250, in response to that a data access operation for the synchronization block occurs, updating a world tree of local data according to the synchronization block to generate a new data point and a new world tree root.

After the synchronization block is acquired, if the data in the synchronization block needs to be accessed, it is usually required to read the data into the memory and then process the data, that is, it is required to first construct local data for the accessed block, and then respond to the access operation.

When the synchronization block is first created by the other node, a world tree has been constructed, a transaction request and an execution result are recorded in the block, and the data point of the constructed world tree is recorded in the block. The data point stored in the block refers to a patch data point or a newly added data point updated based on the world tree of the previous block, and the world tree root of the world tree corresponding to the synchronization block. Therefore, the data point may be updated to the local data based on the data point recorded in the synchronization block and the world tree root.

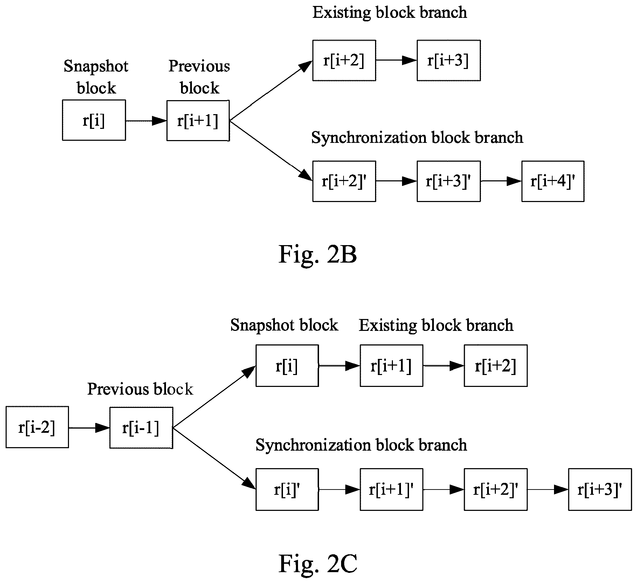

Specifically, the updating a world tree of local data according to the synchronization block specifically includes: if the previous block is located after a newest snapshot block, according to a data point of a world tree recorded in the synchronization block, constructing the world tree of the synchronization block based on an existing world tree of the local data. As shown in Fig. 2B, the previous block r[i+1] is located after the newest snapshot block r[i]. Assuming that the synchronization block r[i+3]' needs to be accessed, then according to the patch data points and the newly added points between the world trees of the synchronization block r[i+3]' and the block r[i+1], which are recorded in the synchronization block r[i+3]', the synchronization block r[i+3]' is updated to the local data for access.

If the previous block is located before the newest snapshot block, transaction requests are executed from back to front one by one from the newest snapshot block to the previous block. An undo update is performed on a snapshot world tree corresponding to the newest snapshot block according to write data in an execution result of a transaction request. The world tree of the synchronization block is constructed based on the snapshot world tree after the undo update, according to the data point of the world tree recorded in the synchronization block. As shown in Fig. 2C, the previous block r[i-1] is located before the newest snapshot block r[i]. Assuming that the synchronization block r[i+3]' needs to be accessed. The synchronization block r[i+3]' needs to be updated to the local data memory. At this time, since the local data on which the synchronization block r[i+3]' is based is not entirely local, and the data of the block r[i-1] before the newest snapshot block does not exist locally, it is required to execute, starting from the newest snapshot block, the transaction requests of the newest snapshot block r[i] and the previous block r[i-1], and perform the undo update on the newest snapshot world tree according to the execution results of the transaction requests. It is further required to obtain the local data of the synchronization block r[i+3]' according to the relationship between the newest snapshot world tree of the previous block r[i-1] and the world tree of the synchronization block r[i+3]'.

According to the technical solution of this embodiment, the processing process after the synchronization block is acquired, and thus, the local access for the synchronization block can be quickly performed.

### Third Embodiment

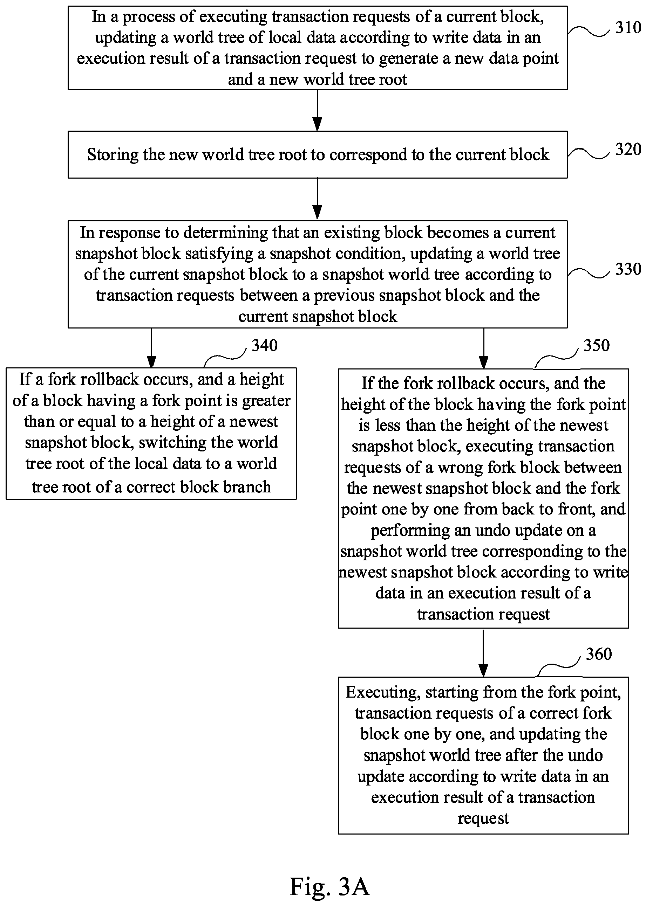

Fig. 3A is a flowchart of a data storage method for a blockchain provided in the third embodiment of the present disclosure. In this embodiment, a processing approach when a fork occurs in a blockchain is specifically introduced based on the aforementioned storage scheme.

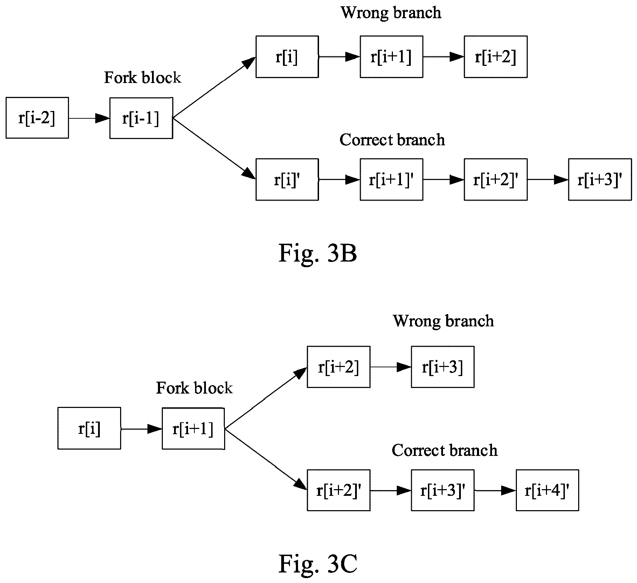

The so-called blockchain forking refers to that, for some reasons such as a network communication failure, a node failure, etc., when some node or nodes process a block, the data generated by the node or nodes is different from that of other nodes. However, such inconsistence would not be discovered immediately, and thus, a new block is generated based on the inconsistent blocks. As shown in Fig. 3B, starting from the block r[i-1], the blockchains generated by different nodes are different, i.e., a fork is generated. Until the forking phenomenon is found based on the forking mechanism in the blockchain, a correct branch and a wrong branch would be determined at this point, for example, the long chain is the correct fork. Then, the node having the wrong branch removes the block of the wrong branch, synchronously acquires the block of the correct branch from the other nodes, and stores the block locally. The above is the fork processing in the blockchain. In the fork processing process, in addition to obtaining the block of the correct branch, the node needs to update the local data accordingly.

Based on the storage approach of the local data provided in the embodiments of the present disclosure, a specific implementation when the fork is processed is as follows.

S310, in a process of executing transaction requests of a current block, updating a world tree of local data according to write data in an execution result of a transaction request to generate a new data point and a new world tree root, the new data point being an entity data point or a patch data point of an existing entity data point.

S320, storing the new world tree root to correspond to the current block.

S330, in response to determined that an existing block becomes a current snapshot block satisfying a snapshot condition, updating a world tree of the current snapshot block to a snapshot world tree according to transaction requests between a previous snapshot block and the current snapshot block, where a data point of the snapshot world tree is an entity data point.

S340, in response to that a fork rollback occurs, and a height of a block having a fork point is greater than or equal to a height of a newest snapshot block, switching the world tree root of the local data to a world tree root of a correct block branch.

According to the blocks r[i+2]', r[i+3]' and r[i+4]' synchronously acquired from the other nodes, it is determined that the fork occurs based on a set rule, and the synchronously acquired blocks are the correct block branch. Taking Fig. 3C as an example, the block having the fork point is referred to as a fork block, and is the block r[i+1]. As shown in the above example, the newest snapshot block from back to front in the blockchain is r[i]. Therefore, the height of the block r[i+1] having the fork point is greater than or equal to the height of the newest snapshot block r[i].

When the fork is processed, it is required to switch the world tree root of the current newest block to the newest block of the correct branch. That is, the world tree root of the current newest block may be directly switched to the world tree root of the block r[i+4]'. Thus, the fork processing may be completed.

When the world tree roots of the wrong blocks r[i+2] and r[i+3] are not accessed during the query, the data points of the world trees would not be accessed by the index, which is equivalent to invalid. Obviously, the invalid data points may also be deleted, to release the storage space.

The above operation solves the processing for a fork situation, that is, the situation where the fork point is located in a subsequent block of the snapshot block. Since, starting from the newest snapshot block, the subsequent wrong blocks and the subsequent correct blocks have corresponding world trees, no matter what block is to be rolled back to, the local data only needs to be directly mounted to the world tree root of the block where the fork point is located, that is, the data state of the block is rolled back, and the world trees of the subsequent wrong blocks are directly invalid.

If the fork point is located in the previous block of the snapshot block, the following processing approach may be used.

S350, in response to that the fork rollback occurs, and the height of the block having the fork point is less than the height of the newest snapshot block, executing transaction requests of a wrong fork block between the newest snapshot block and the fork point one by one from back to front, and performing an undo update on a snapshot world tree corresponding to the newest snapshot block according to write data in an execution result of a transaction request.

Taking Fig. 3B as an example, the fork block is the block r[i-1], the height of which is less than that of the newest snapshot block r[i]. At this time, the processing is performed using the following approach.

Since the blocks before the newest snapshot block do not have a corresponding world tree, it is not known what changes the data objects perform in these blocks not having the world trees, and thus, the operation of undoing the transaction requests one by one is required.

The operation is divided into two stages. First, the snapshot world tree of the newest snapshot block is directly rolled back to, and the world tree of a subsequent wrong block is invalid. Then, the transaction requests of the wrong block are undone one by one based on the snapshot world tree (undo operation).

In combination with the examples of Figs. 1B and 3B, the newest snapshot block is r[i], but is a wrong block that needs a rollback. At this time, based on the snapshot world tree of the block r[i], the transaction requests of the block r[i] are executed one by one from back to front. The transaction requests of the block r[i] may be read directly from the local data. If the execution result of the transaction request is the operation of newly adding the data object of the data point e, the undo update is to delete the data point e in the snapshot world tree, and the pointers in the corresponding upper-level data point b and the corresponding root node a[i] also need to be updated. If the execution result of the transaction request is to update the data value of the data object of the data point c, the change for the data value of the data object may be directly undone. If the execution result of the transaction request is to delete the data object, a data point is newly added to the snapshot world tree to correspond to the deleted data object. As such, the undo operation is performed on the transaction requests of the wrong block, and the snapshot world tree is updated accordingly.

S360, executing, starting from the fork point, transaction requests of a correct fork block one by one, and updating the snapshot world tree after the undo update according to write data in an execution result of a transaction request.

When the undo update performed on the snapshot world tree is to the block where the fork point is located, the transaction requests of the correct fork block are executed one by one, starting from the fork point, and the snapshot world tree is updated according to the execution result.

There may be many approaches to updating the snapshot world tree after the undo update according to the write data in the execution result of the transaction request. For example, an approach may be: updating, according to the write data in the execution result of the transaction request, the snapshot world tree after the undo update until to a location of the newest snapshot block or a newest block, and reserving the snapshot world tree.

That is, when the correct blocks are executed one by one, a correct block is used as a new snapshot world tree. After the update is completed, the newest block r[i+3]' is the newest snapshot block and has the corresponding snapshot world tree, and the preceding block does not reserve a world tree.

Alternatively, when the update is to the previous newest snapshot block r[i], the generation of the snapshot world tree is stopped, but the generation of the ordinary world tree is continued.

The different approaches may be applicable to different situations. In the first situation, since one fork has been solved, the possibility that a fork occurs again in the correct branch is low. Therefore, the ordinary world tree may not need to be reserved, and thus, the world tree is directly changed to the snapshot world tree, such that the storage needs can be reduced. In the second situation, the original location of the newest snapshot tree is reserved, such that the pushing mechanism of the snapshot tree is implemented according to the original plan.

According to the technical solution of this embodiment, the method of effectively solving the fork is provided based on the hybrid storage approach. Since the ordinary world trees of a plurality of consecutive blocks are stored, the rollback may be quickly performed when the fork occurs, and thus, it is not required to perform the undo operation on the transaction requests of each wrong block one by one. If the world tree does not exist, it is required to first undo the transaction requests of the wrong block one by one, and then execute the transaction requests of the correct block one by one, when the rollback is performed. Thus, the storage the local data during the processing for the fork can be completed. Obviously, it is required to occupy more computational resources, and the processing for the fork takes a longer time.

### Fourth Embodiment

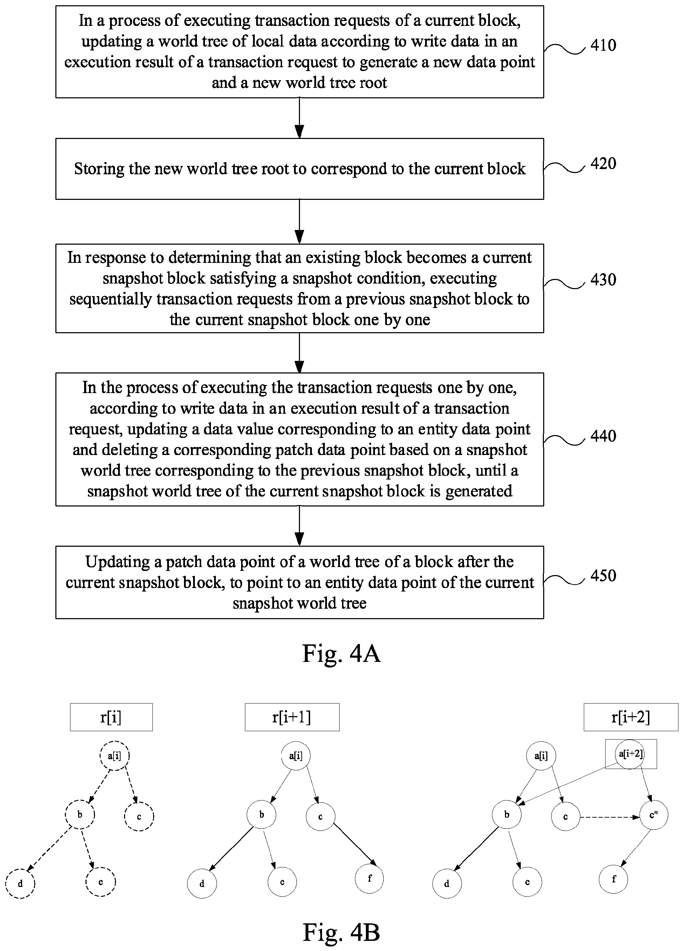

Fig. 4A is a flowchart of a data storage method for a blockchain provided in the fourth embodiment of the present disclosure. The technical solution of this embodiment provides an approach to pushing the location of a snapshot block backwards in a blockchain to update a snapshot world tree. The approach specifically includes the following steps.

S410, in a process of executing transaction requests of a current block, updating a world tree of local data according to write data in an execution result of a transaction request to generate a new data point and a new world tree root, the new data point being an entity data point or a patch data point of an existing entity data point.

S420, storing the new world tree root to correspond to the current block.

S430, in response to determined that an existing block becomes a current snapshot block satisfying a snapshot condition, executing sequentially transaction requests from a previous snapshot block to the current snapshot block one by one.

S440, in the process of executing the transaction requests one by one, according to write data in an execution result of a transaction request, updating a data value corresponding to an entity data point and deleting a corresponding patch data point based on a snapshot world tree corresponding to the previous snapshot block, until a snapshot world tree of the current snapshot block is generated.

In combination with the examples given with reference to Figs. 1B and 4B, if it is determined that the block r[i+1] needs to become the current snapshot block according to the pushing rule of the snapshot block, the previous snapshot block is the block r[i]. A transaction request of the block r[i+1] is executed to update the snapshot world tree of the previous snapshot block r[i]. If the execution result of the transaction request is to update the data object of the data point c, a change operation may be directly performed on the value of the data object of the data point c, and the changed data object is stored to still correspond to the data point c, and thus, the patch data point c' is deleted. Alternatively, the changed data object may also be stored to correspond to the data point c', and thus, the data point c is deleted. Both the data points c and c' are data points, and thus may be arbitrarily selected to store the data object. The root node and the data point f that is pointed to are updated accordingly. As a result, the snapshot world tree is continuously updated, the entity data points are reserved, and a large number of patch data points are deleted, thereby saving storage space. When the update is completed, the snapshot world tree of the block r[i] no longer exists, and the block r[i] is not a snapshot world tree.

S450, updating a patch data point of a world tree of a block after the current snapshot block, to point to an entity data point of the current snapshot world tree.

After the world tree of the current snapshot block is updated to the snapshot world tree, for the block r[i+2] after the current snapshot block r[i+1], the data point to which the block r[i+2] originally points may have been invalidated. For example, if the data point c' no longer exists, the patch data point (e.g., the patch data point c") of the world tree of the block r[i+2] needs to be updated to point to the entity data point c. The pointer associated with the data point c' may be updated when the data points c and c' are combined, that is, the patch data point c" is updated.

On the basis of the above technical solution, it is possible to determine when to perform the update operation on the snapshot world tree as needed. The block in which the fork is not easily formed is generally used as the newest snapshot block, according to the probability of the fork.

That is, determining the existing block becoming the current snapshot block satisfying the snapshot condition may include: determining a block having a block interval from the previous snapshot block as the current snapshot block according to a set snapshot block interval, the block interval from the previous snapshot block reaching the snapshot block interval.

The snapshot block interval may be a longest fork interval allowed by a consensus algorithm of the blockchain. Alternatively, according to the storage capacity, it is also possible to set that the block reserved for a period of time or reserved with a height has an ordinary world tree, for example, the world tree of a block saved within one hour or one day.

### Fifth Embodiment

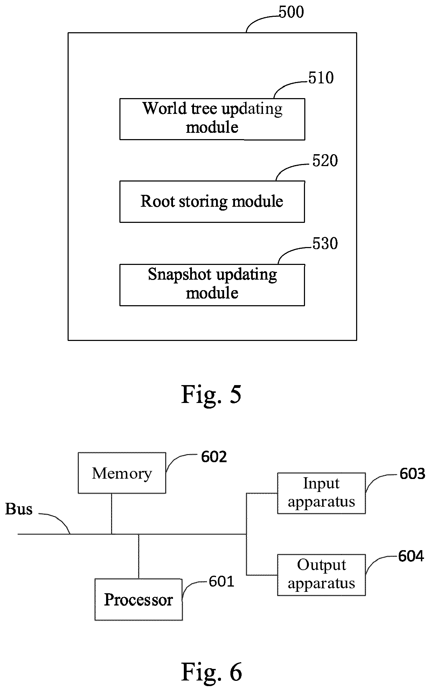

Fig. 5 is a schematic structural diagram of a data storage apparatus 500 for a blockchain provided in the fifth embodiment of the present disclosure. This embodiment may be implemented by means of software and/or hardware. Specifically, the apparatus is configured in a blockchain node, and includes a world tree updating module 510, a root storing module 520 and a snapshot updating module 530.

Here, the world tree updating module 510 is configured to, in a process of executing transaction requests of a current block, update a world tree of local data according to write data in an execution result of a transaction request to generate a new data point and a new world tree root, the new data point being an entity data point or a patch data point of an existing entity data point.

The root storing module 520 is configured to store the new world tree root to correspond to the current block.

The snapshot updating module 530 is configured to, in response to determining that an existing block becomes a current snapshot block satisfying a snapshot condition, update a world tree of the current snapshot block to a snapshot world tree according to transaction requests between a previous snapshot block and the current snapshot block, where a data point of the snapshot world tree is an entity data point.

According to the technical solution of this embodiment, the world tree storage scheme is partially used to constitute the hybrid storage approach. Thus, all the world tree states of a part of blocks are reserved, which facilitates querying the states at any time. In addition, previous blocks are adjusted to the snapshot state, thereby reducing the amount of data storage. The above storage scheme is particularly advantageous when a fork occurs. When the fork occurs, the world tree of a certain block can be quickly rolled back to. There is also no need to reserve a large number of world trees in the previous blocks in which the fork does not occur.

Alternatively, the world tree updating module 510 is specifically configured to: in response to the write data in the execution result of the transaction request referring to a new addition for a data object, add newly an entity data point based on a world tree of a previous block, and store correspondingly a data value of the newly added data object; in response to the write data in the execution result of the transaction request referring to an update for a data value of an existing data object, add a patch data point to a data point of the existing data object based on the world tree of the previous block, and record the updated data value; in response to the write data in the transaction request execution result referring to a deletion for the data value of the existing data object, add a patch data point to the data point of the existing data object based on the world tree of the previous block, and record the deletion for the data value; and perform an update to generate a corresponding upper-level data point and a corresponding world tree root, according to the newly added entity data point or the patch data point.

Alternatively, the snapshot updating module 530 is specifically configured to: execute sequentially transaction requests from the previous snapshot block to the current snapshot block one by one; and in the process of executing the transaction requests one by one, according to write data in the execution result of the transaction request, update a data value corresponding to an entity data point and delete a corresponding patch data point based on a snapshot world tree corresponding to the previous snapshot block, until the snapshot world tree of the current snapshot block is generated.

Alternatively, the apparatus further includes a pointing updating module, configured to, after the world tree of the current snapshot block is updated to the snapshot world tree, update a patch data point of a world tree of a block after the current snapshot block, to point to an entity data point of the current snapshot world tree.

Alternatively, the snapshot updating module 530 is specifically configured to: determine a block having a block interval from the previous snapshot block as the current snapshot block according to a set snapshot block interval, the block interval from the previous snapshot block reaching the snapshot block interval.

Alternatively, the apparatus further includes a block synchronizing module, configured to acquire, from another node, at least one synchronization block, the synchronization block being connected to an existing block in a locally stored blockchain, the existing block being used as a previous block of the synchronization block.

Alternatively, the apparatus further includes an access updating module, configured to, in response to a data access operation for the synchronization block occurring, update a world tree of local data according to the synchronization block to generate a new data point and a new world tree root.

Here, the access updating module is specifically configured to: in response to the previous block being located after a newest snapshot block, construct, according to a data point of a world tree recorded in the synchronization block, the world tree of the synchronization block based on an existing world tree of the local data; and in response to the previous block being located before the newest snapshot block, execute transaction requests from back to front one by one from the newest snapshot block to the previous block, perform an undo update on a snapshot world tree corresponding to the newest snapshot block according to write data in an execution result of a transaction request, and construct, according to the data point of the world tree recorded in the synchronization block, the world tree of the synchronization block based on the snapshot world tree after the undo update.

Alternatively, the apparatus further includes a fork rollback module, configured to: in response to that a fork rollback occurs, and a height of a block having a fork point is greater than or equal to a height of the newest snapshot block, switch the world tree root of the local data to a world tree root of a correct block branch; and in response to that the fork rollback occurs, and the height of the block having the fork point is less than the height of the newest snapshot block, execute transaction requests of a wrong fork block between the newest snapshot block and the fork point one by one from back to front, perform an undo update on the snapshot world tree corresponding to the newest snapshot block according to write data in an execution result of a transaction request; execute, starting from the fork point, transaction requests of a correct fork block one by one, and update the snapshot world tree after the undo update according to write data in an execution result of a transaction request.

Here, the fork rollback module is specifically configured to: update, according to the write data in the execution result of the transaction request, the snapshot world tree after the undo update until to a location of the newest snapshot block or of a newest block, and reserve the snapshot world tree.

Alternatively, the apparatus further includes a block storing module, configured to, in the process of executing the transaction requests of the current block, store sequentially data of the transaction requests into the local data in units of blocks.

Alternatively, the apparatus further includes a world tree deleting module, configured to: delete a world tree corresponding to a block before the current snapshot block, after the world tree of the current snapshot block is updated to the snapshot world tree.

### Sixth Embodiment

According to embodiments of the present disclosure, the present disclosure further provides an electronic device and a readable storage medium.

As shown in Fig. 6, Fig. 6 is a block diagram of an electronic device of a data storage method for a blockchain according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the electronic device includes one or more processors 601, a memory 602, and an interface for connecting parts, the interface including a high speed interface and a low speed interface. The parts are interconnected using different buses, and may be mounted on a common motherboard or in other ways as needed. The processors may process an instruction executed within the electronic device, the instruction including an instruction stored in the memory or on the memory to display graphical information of a GUI on an external input/output apparatus such as a display device coupled to the interface. In other implementations, a plurality of processors and/or a plurality of buses may be used, if desired, along with a plurality of memories. Also, a plurality of electronic devices may be connected, and each device provides a portion of necessary operations (e.g., as a server array, a group of blade servers or a multi-processor system). In Fig. 6, one processor 601 is taken as an example.

The memory 602 is a non-transitory computer readable storage medium provided in the present disclosure. Here, the memory stores an instruction executable by at least one processor, to cause the at least one processor to perform the data storage method for a blockchain provided in the present disclosure. The non-transitory computer readable storage medium in the present disclosure stores a computer instruction, the computer instruction being used to cause a computer to perform the data storage method for a blockchain provided in the present disclosure.

As the non-transitory computer readable storage medium, the memory 602 may be used to store a non-transitory software program, a non-transitory computer executable program and a module such as a program instruction/module (e.g., the world tree updating module 510, the root storing module 520 and the snapshot updating module 530 shown in Fig. 5) corresponding to the data storage method for a blockchain in the embodiments of the present disclosure. The processor 601 executes various functional applications and data processing of the server by running the non-transitory software program, the instruction and the module stored in the memory 602, i.e., implements the data storage method for a blockchain in the above embodiments of the method.

The memory 602 may include a program storage area and a data storage area. The program storage area may store an operating system and an application required for at least one function. The data storage area may store data and the like created according to the usage of a terminal device. In addition, the memory 602 may include a high-speed random access memory, and may also include a non-volatile memory, e.g., at least one disk storage device, a flash memory device or other non-volatile solid-state storage devices. In some embodiments, the memory 602 may alternatively include memories remotely arranged relative to the processor 601, where the remote memories may be connected to the terminal device by a network. An example of the above network includes but not limited to, the Internet, an enterprise intranet, a local area network, a mobile communications network, a blockchain network, and a combination thereof.

The electronic device of the data storage method for a blockchain may further include: an input apparatus 603 and an output apparatus 604. The processor 601, the memory 602, the input apparatus 603 and the output apparatus 604 may be connected via a bus or in other ways. In Fig. 6, the connection via a bus is taken as an example.

The input apparatus 603 may receive an inputted number or inputted character information, and generate a key signal input related to the user setting and functional control of the electronic device for storing data of a blockchain. For example, the input apparatus is a touch screen, a keypad, a mouse, a track pad, a touch pad, a pointing stick, one or more mouse buttons, a track ball, a joystick, or the like. The output apparatus 604 may include a display device, an auxiliary lighting apparatus (e.g., an LED), a tactile feedback apparatus (e.g., a vibration motor), etc. The display device may include, but not limited to, a liquid crystal display (LCD), a light emitting diode (LED) display, and a plasma display. In some embodiments, the display device may be a touch screen.

Various implementations of the systems and techniques described herein may be implemented in a digital electronic circuit system, an integrated circuit system, an application specific integrated circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general-purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or an object-oriented programming language, and/or an assembly/machine language. As used herein, the terms "machine readable medium" and "computer readable medium" refer to any computer program product, device and/or apparatus (e.g., a magnetic disk, an optical disk, a memory and a programmable logic device (PLD)) used to provide a machine instruction and/or data to the programmable processor, and include a machine readable medium that receives the machine instruction as a machine readable signal. The term "machine readable signal" refers to any signal used to provide the machine instruction and/or data to the programmable processor.

To provide an interaction with a user, the systems and techniques described here maybe implemented on a computer having a display apparatus (e.g., a cathode ray tube (CRT)) or an LCD (liquid crystal display) monitor) for displaying information to the user, and a keyboard and a pointing apparatus (e.g., a mouse or a track ball) by which the user may provide the input to the computer. Other kinds of apparatuses may also be used to provide the interaction with the user. For example, a feedback provided to the user may be any form of sensory feedback (e.g., a visual feedback, an auditory feedback, or a tactile feedback); and an input from the user may be received in any form, including an acoustic input, a speech input, or a tactile input.

The systems and techniques described here may be implemented in a computing system (e.g., as a data server) that includes a backend part, implemented in a computing system (e.g., an application server) that includes a middleware part, implemented in a computing system (e.g., a user computer having a graphical user interface or a Web browser through which the user may interact with an implementation of the systems and techniques described here) that includes a frontend part, or implemented in a computing system that includes any combination of the backend part, the middleware part or the frontend part. The parts of the system may be interconnected by any form or medium of digital data communication (e.g., a communication network). Examples of the communication network include a local area network (LAN), a wide area network (WAN), the Internet and a blockchain network.

The computer system may include a client and a server. The client and the server are generally remote from each other and typically interact through the communication network. The relationship between the client and the server is generated through computer programs running on the respective computer and having a client-server relationship to each other.

It should be understood that the various forms of processes shown above may be used to resort, add or delete steps. For example, the steps described in the present disclosure may be performed in parallel, sequentially, or in a different order. As long as the desired result of the technical solution disclosed in the present disclosure can be achieved, no limitation is made herein.

## Claims

1. A data storage method for a blockchain, performed by a blockchain node, wherein data affected by transaction requests processed on the blockchain are locally stored, the method comprising:
in a process of executing transaction requests of a current block, updating (110) a world tree of local data, wherein data objects are stored through a tree structure, according to write data in an execution result of a transaction request to generate a new data point and a new world tree root, the new data point being an entity data point or a patch data point of an existing entity data point; wherein the entity data point directly points to an actual value of a data object, and the patch data point records an update operation based on an existing entity data point;
storing (120) the new world tree root corresponding to the current block; and
in response to determining that an existing block becomes a current snapshot block satisfying a snapshot condition according to a probability of a fork for the current snapshot block, updating (130) a world tree of the current snapshot block to a snapshot world tree according to transaction requests between a previous snapshot block and the current snapshot block, such that data objects of the snapshot block and all blocks before the snapshot block are finally updated, and the world tree of local data comprises the snapshot world tree and, for blocks after the current snapshot block, a plurality of word tree roots comprising new patch data points,
wherein a data point of the snapshot world tree is an entity data point which directly points to an actual value of a data object, and
wherein determining that an existing block becomes a current snapshot block satisfying a snapshot condition according to a probability of a fork for the current snapshot block comprises:
determining a block having a block interval from the previous snapshot block as the current snapshot block according to a set snapshot block interval, the block interval from the previous snapshot block reaching the snapshot block interval, the snapshot block interval being a longest fork interval allowed by a consensus algorithm of the blockchain.

2. The method according to claim 1, wherein the updating the world tree of local data according to write data in the execution result of the transaction request to generate the new data point and the new world tree root comprises:
in response to the write data in the execution result of the transaction request referring to a new addition for a data object, adding newly an entity data point based on a world tree of a previous block, and storing correspondingly a data value of the newly added data object;
in response to the write data in the execution result of the transaction request referring to an update for a data value of an existing data object, adding a patch data point to a data point of the existing data object based on the world tree of the previous block, and recording the updated data value;
in response to the write data in the transaction request execution result referring to a deletion for the data value of the existing data object, adding a patch data point to the data point of the existing data object based on the world tree of the previous block, and recording the deletion for the data value; and
performing an update to generate a corresponding upper-level data point and a corresponding world tree root, according to the newly added entity data point or the patch data point.

3. The method according to claim 1 or 2, wherein the updating the world tree of the current snapshot block to the snapshot world tree according to transaction requests between the previous snapshot block and the current snapshot block comprises:
executing sequentially transaction requests from the previous snapshot block to the current snapshot block one by one; and
in the process of executing the transaction requests one by one, according to write data in the execution result of the transaction request, updating a data value corresponding to an entity data point and deleting a corresponding patch data point based on a snapshot world tree corresponding to the previous snapshot block, until the snapshot world tree of the current snapshot block is generated.

4. The method according to claim 3, wherein after updating the world tree of the current snapshot block to the snapshot world tree, the method further comprises:
updating a patch data point of a world tree of a block after the current snapshot block, to point to an entity data point of the current snapshot world tree.

5. The method according to any one of claims 1-4, further comprising:
acquiring, from another node, at least one synchronization block, the synchronization block being connected to an existing block in a locally stored blockchain, the existing block being used as a previous block of the synchronization block.

6. The method according to claim 5, further comprising:
in response to a data access operation for the synchronization block occurring, updating a world tree of local data according to the synchronization block to generate a new data point and a new world tree root.

7. The method according to claim 6, wherein the updating the world tree of local data according to the synchronization block comprises:
in response to the previous block being located after a newest snapshot block, constructing, according to a data point of a world tree recorded in the synchronization block, the world tree of the synchronization block based on an existing world tree of the local data; and
in response to the previous block being located before the newest snapshot block, executing transaction requests from back to front one by one from the newest snapshot block to the previous block, performing an undo update on a snapshot world tree corresponding to the newest snapshot block according to write data in an execution result of a transaction request, and constructing, according to the data point of the world tree recorded in the synchronization block, the world tree of the synchronization block based on the snapshot world tree after the undo update.

8. The method according to claim 7, further comprising:
in response to that a fork rollback occurs, and a height of a block having a fork point is greater than or equal to a height of the newest snapshot block, switching the world tree root of the local data to a world tree root of a correct block branch; and
in response to that the fork rollback occurs, and the height of the block having the fork point is less than the height of the newest snapshot block, executing transaction requests of a wrong fork block between the newest snapshot block and the fork point one by one from back to front, performing an undo update on the snapshot world tree corresponding to the newest snapshot block according to write data in an execution result of a transaction request; executing, starting from the fork point, transaction requests of a correct fork block one by one, and updating the snapshot world tree after the undo update according to write data in an execution result of a transaction request.

9. The method according to claim 8, wherein the updating the snapshot world tree after the undo update according to write data in the execution result of the transaction request comprises:
updating, according to the write data in the execution result of the transaction request, the snapshot world tree after the undo update until to a location of the newest snapshot block or a newest block, and reserving the snapshot world tree.

10. The method according to any one of claims 1-9, further comprising:
in the process of executing the transaction requests of the current block, storing sequentially data of the transaction requests into the local data in units of blocks.

11. The method according to any one of claims 1-10, wherein after updating the world tree of the current snapshot block to the snapshot world tree, the method further comprises: deleting a world tree corresponding to a block before the current snapshot block.

12. A data storage apparatus for a blockchain, configured in a blockchain node, wherein data affected by transaction requests processed on the blockchain are locally stored, the apparatus comprising:
a world tree updating module (510), configured to, in a process of executing transaction requests of a current block, update a world tree of local data, wherein data objects are stored through a tree structure, according to write data in an execution result of a transaction request to generate a new data point and a new world tree root, the new data point being an entity data point or a patch data point of an existing entity data point, wherein the entity data point directly points to an actual value of a data object, and the patch data point records an update operation based on an existing entity data point;
a root storing module (520), configured to store the new world tree root corresponding to the current block; and
a snapshot updating module (530), configured to, in response to determining that an existing block becomes a current snapshot block satisfying a snapshot condition according to a probability of a fork for the current snapshot block, update a world tree of the current snapshot block to a snapshot world tree according to transaction requests between a previous snapshot block and the current snapshot block, such that data objects of the snapshot block and all blocks before the snapshot block are finally updated, and the world tree of local data comprises the snapshot world tree and, for blocks after the current snapshot block, a plurality of word tree roots comprising new patch data points, wherein a data point of the snapshot world tree is an entity data point which directly points to an actual value of a data object, and
wherein determining that an existing block becomes a current snapshot block satisfying a snapshot condition according to a probability of a fork for the current snapshot block comprises:
determining a block having a block interval from the previous snapshot block as the current snapshot block according to a set snapshot block interval, the block interval from the previous snapshot block reaching the snapshot block interval, the snapshot block interval being a longest fork interval allowed by a consensus algorithm of the blockchain.

13. An electronic device, comprising:
at least one processor (601); and
a memory (602), communicatively connected with the at least one processor,
wherein the memory stores an instruction executable by the at least one processor, and the instruction when executed by the at least one processor, causes the at least one processor to perform the method according to any one of claims 1-11.

14. A non-transitory computer readable storage medium, storing a computer instruction, wherein the computer instruction is used to cause a computer to perform the method according to any one of claims 1-11.

## Patentansprüche

1. Datenspeicherverfahren für eine Blockchain, das von einem Blockchain-Knoten durchgeführt wird, wobei Daten, die von Transaktionsanfragen betroffen sind, die auf der Blockchain verarbeitet werden, lokal gespeichert werden, wobei das Verfahren umfasst:
in einem Prozess des Verarbeitens von Transaktionsanfragen eines aktuellen Blocks, Aktualisieren (110) eines Weltbaums von lokalen Daten, wobei Datenobjekte durch eine Baumstruktur gespeichert werden, gemäß Schreibdaten in einem Ausführungsergebnis einer Transaktionsanfrage, um einen neuen Datenpunkt und eine neue Weltbaumwurzel zu erzeugen, wobei der neue Datenpunkt ein Entitätsdatenpunkt oder ein Patch-Datenpunkt eines bestehenden Entitätsdatenpunkts ist; wobei der Entitätsdatenpunkt direkt auf einen tatsächlichen Wert eines Datenobjekts zeigt und der Patch-Datenpunkt eine Aktualisierungsoperation basierend auf einem bestehenden Entitätsdatenpunkt aufzeichnet;
Speichern (120) der neuen Weltbaumwurzel, die dem aktuellen Block entspricht; und
als Reaktion auf das Bestimmen, dass ein bestehender Block ein aktueller Snapshot-Block wird, der eine Snapshot-Bedingung erfüllt, gemäß einer Wahrscheinlichkeit einer Abzweigung für den aktuellen Snapshot-Block, Aktualisieren (130) eines Weltbaums des aktuellen Snapshot-Blocks auf einen Snapshot-Weltbaum gemäß Transaktionsanfragen zwischen einem vorherigen Snapshot-Block und dem aktuellen Snapshot-Block, so dass Datenobjekte des Snapshot-Blocks und aller Blöcke vor dem Snapshot-Block endgültig aktualisiert werden, und der Weltbaum von lokalen Daten den Snapshot-Weltbaum und, für Blöcke nach dem aktuellen Snapshot-Block, eine Mehrzahl von Weltbaumwurzeln umfasst, die neue Patch-Datenpunkte umfassen,
wobei ein Datenpunkt des Snapshot-Weltbaums ein Entitätsdatenpunkt ist, der direkt auf einen tatsächlichen Wert eines Datenobjekts zeigt, und
wobei das Bestimmen, dass ein bestehender Block ein aktueller Snapshot-Block wird, der eine Snapshot-Bedingung erfüllt, gemäß einer Wahrscheinlichkeit einer Abzweigung für den aktuellen Snapshot-Block umfasst:
Bestimmen eines Blocks mit einem Blockintervall vom vorherigen Snapshot-Block als den aktuellen Snapshot-Block gemäß einem festgelegten Snapshot-Blockintervall, wobei das Blockintervall vom vorherigen Snapshot-Block das Snapshot-Blockintervall erreicht, wobei das Snapshot-Blockintervall ein längstes Abzweigungsintervall ist, das von einem Konsensalgorithmus der Blockchain erlaubt wird.

2. Verfahren nach Anspruch 1, wobei das Aktualisieren des Weltbaums von lokalen Daten gemäß Schreibdaten im Ausführungsergebnis der Transaktionsanfrage, um den neuen Datenpunkt und die neue Weltbaumwurzel zu erzeugen, umfasst:
als Reaktion darauf, dass sich die Schreibdaten im Ausführungsergebnis der Transaktionsanfrage auf eine neue Hinzufügung für ein Datenobjekt beziehen, neues Hinzufügen eines Entitätsdatenpunkts basierend auf einem Weltbaum eines vorherigen Blocks und entsprechendes Speichern eines Datenwerts des neu hinzugefügten Datenobjekts;
als Reaktion darauf, dass sich die Schreibdaten im Ausführungsergebnis der Transaktionsanfrage auf eine Aktualisierung für einen Datenwert eines bestehenden Datenobjekts beziehen, Hinzufügen eines Patch-Datenpunkts zu einem Datenpunkt des bestehenden Datenobjekts basierend auf dem Weltbaum des vorherigen Blocks und Aufzeichnen des aktualisierten Datenwerts;
als Reaktion darauf, dass sich die Schreibdaten im Ausführungsergebnis der Transaktionsanfrage auf eine Löschung für den Datenwert des bestehenden Datenobjekts beziehen, Hinzufügen eines Patch-Datenpunkts zu dem Datenpunkt des bestehenden Datenobjekts basierend auf dem Weltbaum des vorherigen Blocks und Aufzeichnen der Löschung für den Datenwert; und
Durchführen einer Aktualisierung, um einen entsprechenden oberrangigen Datenpunkt und eine entsprechende Weltbaumwurzel gemäß dem neu hinzugefügten Entitätsdatenpunkt oder dem Patch-Datenpunkt zu erzeugen.

3. Verfahren nach Anspruch 1 oder 2, wobei das Aktualisieren des Weltbaums des aktuellen Snapshot-Blocks auf den Snapshot-Weltbaum gemäß Transaktionsanfragen zwischen dem vorherigen Snapshot-Block und dem aktuellen Snapshot-Block umfasst:
sequentielles Ausführen von Transaktionsanfragen vom vorherigen Snapshot-Block auf den aktuellen Snapshot-Block nacheinander; und
im Prozess des Ausführens der Transaktionsanfragen nacheinander gemäß Schreibdaten im Ausführungsergebnis der Transaktionsanfrage Aktualisieren eines Datenwerts, der einem Entitätsdatenpunkt entspricht, und Löschen eines entsprechenden Patch-Datenpunkts basierend auf einem Snapshot-Weltbaum, der dem vorherigen Snapshot-Block entspricht, bis der Snapshot-Weltbaum des aktuellen Snapshot-Blocks erzeugt ist.

4. Verfahren nach Anspruch 3, wobei nach dem Aktualisieren des Weltbaums des aktuellen Snapshot-Blocks auf den Snapshot-Weltbaum das Verfahren ferner umfasst:
Aktualisieren eines Patch-Datenpunkts eines Weltbaums eines Blocks nach dem aktuellen Snapshot-Block, um auf einen Entitätsdatenpunkt des aktuellen Snapshot-Weltbaums zu zeigen.

5. Verfahren nach einem der Ansprüche 1-4, ferner umfassend:
Erfassen, von einem anderen Knoten, mindestens eines Synchronisationsblocks, wobei der Synchronisationsblock mit einem bestehenden Block in einer lokal gespeicherten Blockchain verbunden ist, wobei der bestehende Block als ein vorheriger Block des Synchronisationsblocks verwendet wird.

6. Verfahren nach Anspruch 5, ferner umfassend:
als Reaktion darauf, dass eine Datenzugriffsoperation für den Synchronisationsblock auftritt, Aktualisieren eines Weltbaums von lokalen Daten gemäß dem Synchronisationsblock, um einen neuen Datenpunkt und eine neue Weltbaumwurzel zu erzeugen.

7. Verfahren nach Anspruch 6, wobei das Aktualisieren des Weltbaums von lokalen Daten gemäß dem Synchronisationsblock umfasst:
als Reaktion darauf, dass sich der vorherige Block hinter einem neuesten Snapshot-Block befindet, Konstruieren, gemäß einem Datenpunkt eines im Synchronisationsblock aufgezeichneten Weltbaums, des Weltbaums des Synchronisationsblocks basierend auf einem bestehenden Weltbaum der lokalen Daten; und
als Reaktion darauf, dass sich der vorherige Block vor dem neuesten Snapshot-Block befindet, Ausführen von Transaktionsanfragen nacheinander von hinten nach vorne vom neuesten Snapshot-Block zum vorherigen Block, Durchführen einer Rücknahmeaktualisierung an einem Snapshot-Weltbaum, der dem neuesten Snapshot-Block entspricht, gemäß Schreibdaten in einem Ausführungsergebnis einer Transaktionsanfrage und Konstruieren, gemäß dem Datenpunkt des im Synchronisationsblock aufgezeichneten Weltbaums, des Weltbaums des Synchronisationsblocks basierend auf dem Snapshot-Weltbaum nach der Rücknahmeaktualisierung.

8. Verfahren nach Anspruch 7, ferner umfassend:
als Reaktion darauf, dass ein Abzweigungsrollback auftritt und eine Höhe eines Blocks mit einem Abzweigungspunkt größer oder gleich einer Höhe des neuesten Snapshot-Blocks ist, Umschalten der Weltbaumwurzel der lokalen Daten auf eine Weltbaumwurzel eines korrekten Blockzweigs; und
als Reaktion darauf, dass der Abzweigungsrollback auftritt und die Höhe des Blocks mit dem Abzweigungspunkt kleiner als die Höhe des neuesten Snapshot-Blocks ist, Ausführen von Transaktionsanfragen eines falschen Abzweigungsblocks zwischen dem neuesten Snapshot-Block und dem Abzweigungspunkt nacheinander von hinten nach vorne, Durchführen einer Rücknahmeaktualisierung an dem Snapshot-Weltbaum, der dem neuesten Snapshot-Block entspricht, gemäß Schreibdaten in einem Ausführungsergebnis einer Transaktionsanfrage; Ausführen, beginnend vom Abzweigungspunkt, von Transaktionsanfragen eines korrekten Abzweigungsblocks nacheinander und Aktualisieren des Snapshot-Weltbaums nach der Rücknahmeaktualisierung gemäß Schreibdaten in einem Ausführungsergebnis einer Transaktionsanfrage.

9. Verfahren nach Anspruch 8, wobei das Aktualisieren des Snapshot-Weltbaums nach der Rücknahmeaktualisierung gemäß Schreibdaten im Ausführungsergebnis der Transaktionsanfrage umfasst:
Aktualisieren, gemäß den Schreibdaten im Ausführungsergebnis der Transaktionsanfrage, des Snapshot-Weltbaums nach der Rücknahmeaktualisierung bis zu einem Ort des neuesten Snapshot-Blocks oder eines neuesten Blocks und Reservieren des Snapshot-Weltbaums.

10. Verfahren nach einem der Ansprüche 1-9, ferner umfassend:
im Prozess des Ausführens der Transaktionsanfragen des aktuellen Blocks, sequentielles Speichern von Daten der Transaktionsanfragen in die lokalen Daten in Einheiten von Blöcken.

11. Verfahren nach einem der Ansprüche 1-10, wobei nach dem Aktualisieren des Weltbaums des aktuellen Snapshot-Blocks auf den Snapshot-Weltbaum das Verfahren ferner umfasst:
Löschen eines Weltbaums, der einem Block vor dem aktuellen Snapshot-Block entspricht.

12. Datenspeichervorrichtung für eine Blockchain, die in einem Blockchain-Knoten eingerichtet ist, wobei Daten, die von Transaktionsanfragen betroffen sind, die auf der Blockchain verarbeitet werden, lokal gespeichert werden, wobei die Vorrichtung umfasst:
ein Weltbaum-Aktualisierungsmodul (510), das eingerichtet ist, um in einem Prozess des Ausführens von Transaktionsanfragen eines aktuellen Blocks einen Weltbaum von lokalen Daten zu aktualisieren, wobei Datenobjekte durch eine Baumstruktur gespeichert werden, gemäß Schreibdaten in einem Ausführungsergebnis einer Transaktionsanfrage, um einen neuen Datenpunkt und eine neue Weltbaumwurzel zu erzeugen, wobei der neue Datenpunkt ein Entitätsdatenpunkt oder ein Patch-Datenpunkt eines bestehenden Entitätsdatenpunkts ist, wobei der Entitätsdatenpunkt direkt auf einen tatsächlichen Wert eines Datenobjekts zeigt und der Patch-Datenpunkt eine Aktualisierungsoperation basierend auf einem bestehenden Entitätsdatenpunkt aufzeichnet;
ein Wurzelspeichermodul (520), das eingerichtet ist, die neue Weltbaumwurzel zu speichern, welche dem aktuellen Block entspricht; und
ein Snapshot-Aktualisierungsmodul (530), das eingerichtet ist, um als Reaktion auf das Bestimmen, dass ein bestehender Block ein aktueller Snapshot-Block wird, der eine Snapshot-Bedingung erfüllt, gemäß einer Wahrscheinlichkeit einer Abzweigung für den aktuellen Snapshot-Block, einen Weltbaum des aktuellen Snapshot-Blocks auf einen Snapshot-Weltbaum gemäß Transaktionsanfragen zwischen einem vorherigen Snapshot-Block und dem aktuellen Snapshot-Block zu aktualisieren, so dass Datenobjekte des Snapshot-Blocks und aller Blöcke vor dem Snapshot-Block endgültig aktualisiert werden, und der Weltbaum von lokalen Daten den Snapshot-Weltbaum und, für Blöcke nach dem aktuellen Snapshot-Block, eine Mehrzahl von Weltbaumwurzeln umfasst, die neue Patch-Datenpunkte umfassen,
wobei ein Datenpunkt des Snapshot-Weltbaums ein Entitätsdatenpunkt ist, der direkt auf einen tatsächlichen Wert eines Datenobjekts zeigt, und
wobei das Bestimmen, dass ein bestehender Block ein aktueller Snapshot-Block wird, der eine Snapshot-Bedingung erfüllt, gemäß einer Wahrscheinlichkeit einer Abzweigung für den aktuellen Snapshot-Block umfasst:
Bestimmen eines Blocks mit einem Blockintervall vom vorherigen Snapshot-Block als den aktuellen Snapshot-Block gemäß einem festgelegten Snapshot-Blockintervall, wobei das Blockintervall vom vorherigen Snapshot-Block das Snapshot-Blockintervall erreicht, wobei das Snapshot-Blockintervall ein längstes Abzweigungsintervall ist, das von einem Konsensalgorithmus der Blockchain erlaubt wird.

13. Elektronische Vorrichtung, umfassend:
mindestens einen Prozessor (601); und
einen Speicher (602), der kommunikativ mit dem mindestens einen Prozessor verbunden ist,
wobei der Speicher eine Anweisung speichert, die von dem mindestens einen Prozessor ausführbar ist, und die Anweisung, wenn sie von dem mindestens einen Prozessor ausgeführt wird, den mindestens einen Prozessor veranlasst, das Verfahren nach einem der Ansprüche 1-11 durchzuführen.

14. Nichtflüchtiges computerlesbares Speichermedium, das eine Computeranweisung speichert, wobei die Computeranweisung verwendet wird, um einen Computer zu veranlassen, das Verfahren nach einem der Ansprüche 1-11 durchzuführen.

## Revendications

1. Procédé de stockage de données pour une chaîne de blocs, mis en oeuvre par un noeud de chaîne de blocs, dans lequel des données affectées par les demandes de transaction traitées sur la chaîne de blocs sont stockées localement, le procédé comprenant les étapes ci-dessous consistant à :
dans le cadre d'un processus visant à exécuter des demandes de transaction d'un bloc en cours, mettre à jour (110) une arborescence mondiale de données locales, dans lequel des objets de données sont stockés par l'intermédiaire d'une structure arborescente, conformément à des données d'écriture dans un résultat d'exécution d'une demande de transaction, pour générer un nouveau point de données et une nouvelle racine d'arborescence mondiale, le nouveau point de données étant un point de données d'entité ou un point de données de correctif d'un point de données d'entité existant ; dans lequel le point de données d'entité pointe directement vers une valeur réelle d'un objet de données, et le point de données de correctif enregistre une opération de mise à jour basée sur un point de données d'entité existant ;
stocker (120) la nouvelle racine d'arborescence mondiale correspondant au bloc en cours ; et
en réponse à une détermination selon laquelle un bloc existant devient un bloc d'instantané en cours satisfaisant une condition d'instantané selon une probabilité d'une bifurcation pour le bloc d'instantané en cours, mettre à jour (130) une arborescence mondiale du bloc d'instantané en cours vers une arborescence mondiale d'instantané selon des demandes de transaction entre un bloc d'instantané précédent et le bloc d'instantané en cours, de sorte que des objets de données du bloc d'instantané et de tous les blocs antérieurs au bloc d'instantané sont finalement mis à jour, et dans lequel l'arborescence mondiale de données locales comprend l'arborescence mondiale d'instantané et, pour des blocs postérieurs au bloc d'instantané en cours, une pluralité de racines d'arborescence mondiale comprend de nouveaux points de données de correctif ;
dans lequel un point de données de l'arborescence mondiale d'instantané est un point de données d'entité qui pointe directement vers une valeur réelle d'un objet de données ; et
dans lequel l'étape consistant à déterminer qu'un bloc existant devient un bloc d'instantané en cours satisfaisant une condition d'instantané selon une probabilité d'une bifurcation pour le bloc d'instantané en cours comprend l'étape ci-dessous consistant à :
déterminer un bloc présentant un intervalle de bloc à partir du bloc d'instantané précédent comme étant le bloc d'instantané en cours conformément à un intervalle de bloc d'instantané défini, l'intervalle de bloc à partir du bloc d'instantané précédent atteignant l'intervalle de bloc d'instantané, l'intervalle de bloc d'instantané étant un intervalle de bifurcation le plus long autorisé par un algorithme de consensus de la chaîne de blocs.

2. Procédé selon la revendication 1, dans lequel l'étape de mise à jour de l'arborescence mondiale de données locales selon des données d'écriture dans le résultat d'exécution de la demande de transaction, pour générer le nouveau point de données et la nouvelle racine d'arborescence mondiale, comprend les étapes ci-dessous consistant à :
en réponse au fait que les données d'écriture dans le résultat d'exécution de la demande de transaction font référence à un nouvel ajout pour un objet de données, ajouter nouvellement un point de données d'entité sur la base d'une arborescence mondiale d'un bloc précédent, et stocker de manière correspondante une valeur de données de l'objet de données nouvellement ajouté ;
en réponse au fait que les données d'écriture dans le résultat d'exécution de la demande de transaction font référence à une mise à jour pour une valeur de données d'un objet de données existant, ajouter un point de données de correctif à un point de données de l'objet de données existant sur la base de l'arborescence mondiale du bloc précédent, et enregistrer la valeur de données mise à jour ;
en réponse au fait que les données d'écriture dans le résultat d'exécution de la demande de transaction font référence à une suppression pour la valeur de données de l'objet de données existant, ajouter un point de données de correctif au point de données de l'objet de données existant sur la base de l'arborescence mondiale du bloc précédent, et enregistrer la suppression pour la valeur de données ; et
mettre en oeuvre une mise à jour en vue de générer un point de données de niveau supérieur correspondant et une racine d'arborescence mondiale correspondante, selon le point de données d'entité nouvellement ajouté ou selon le point de données de correctif nouvellement ajouté.

3. Procédé selon la revendication 1 ou 2, dans lequel l'étape de mise à jour de l'arborescence mondiale du bloc d'instantané en cours vers l'arborescence mondiale d'instantané, selon des demandes de transaction entre le bloc d'instantané précédent et le bloc d'instantané en cours, comprend les étapes ci-dessous consistant à :
exécuter séquentiellement, une par une, des demandes de transaction du bloc d'instantané précédent au bloc d'instantané en cours ; et
dans le cadre du processus visant à exécuter, une par une, les demandes de transaction, selon des données d'écriture dans le résultat d'exécution de la demande de transaction, mettre à jour une valeur de données correspondant à un point de données d'entité et supprimer un point de données de correctif correspondant sur la base d'une arborescence mondiale d'instantané correspondant au bloc d'instantané précédent, jusqu'à ce que l'arborescence mondiale d'instantané du bloc d'instantané en cours soit générée.

4. Procédé selon la revendication 3, dans lequel, après l'étape de mise à jour de l'arborescence mondiale du bloc d'instantané en cours vers l'arborescence mondiale d'instantané, le procédé comprend en outre l'étape ci-dessous consistant à :
mettre à jour un point de données de correctif d'une arborescence mondiale d'un bloc postérieur au bloc d'instantané en cours, afin de pointer vers un point de données d'entité de l'arborescence mondiale d'instantané en cours.

5. Procédé selon l'une quelconque des revendications 1 à 4, comprenant en outre l'étape ci-dessous consistant à :
acquérir, auprès d'un autre noeud, au moins un bloc de synchronisation, le bloc de synchronisation étant connecté à un bloc existant dans une chaîne de blocs stockée localement, le bloc existant étant utilisé en tant qu'un bloc précédent du bloc de synchronisation.

6. Procédé selon la revendication 5, comprenant en outre l'étape ci-dessous consistant à :
en réponse à une opération d'accès à des données se produisant pour le bloc de synchronisation, mettre à jour une arborescence mondiale de données locales selon le bloc de synchronisation en vue de générer un nouveau point de données et une nouvelle racine d'arborescence mondiale.

7. Procédé selon la revendication 6, dans lequel l'étape de mise à jour de l'arborescence mondiale de données locales selon le bloc de synchronisation comprend les étapes ci-dessous consistant à :
en réponse au fait que le bloc précédent est situé après un bloc d'instantané le plus récent, construire, selon un point de données d'une arborescence mondiale enregistré dans le bloc de synchronisation, l'arborescence mondiale du bloc de synchronisation, sur la base d'une arborescence mondiale existante des données locales ; et
en réponse au fait que le bloc précédent est situé avant le bloc d'instantané le plus récent, exécuter des demandes de transaction, de l'arrière vers l'avant, une par une, du bloc d'instantané le plus récent au bloc précédent, mettre en oeuvre une mise à jour d'annulation sur une arborescence mondiale d'instantané correspondant au bloc d'instantané le plus récent, selon des données d'écriture dans un résultat d'exécution d'une demande de transaction, et construire, selon le point de données de l'arborescence mondiale enregistré dans le bloc de synchronisation, l'arborescence mondiale du bloc de synchronisation, sur la base de l'arborescence mondiale d'instantané après la mise à jour d'annulation.

8. Procédé selon la revendication 7, comprenant en outre les étapes ci-dessous consistant à :
en réponse au fait qu'un retour en arrière de bifurcation se produit, et qu'une hauteur d'un bloc présentant un point de bifurcation est supérieure ou égale à une hauteur du bloc d'instantané le plus récent, commuter la racine d'arborescence mondiale des données locales en une racine d'arborescence mondiale d'une branche de bloc correcte ; et
en réponse au fait que le retour en arrière de bifurcation se produit, et que la hauteur du bloc présentant le point de bifurcation est inférieure à la hauteur du bloc d'instantané le plus récent, exécuter des demandes de transaction d'un bloc de bifurcation erroné entre le bloc d'instantané le plus récent et le point de bifurcation, une par une, et de l'arrière vers l'avant ; mettre à jour une mise à jour d'annulation sur l'arborescence mondiale d'instantané correspondant au bloc d'instantané le plus récent, selon des données d'écriture dans un résultat d'exécution d'une demande de transaction ; exécuter, à partir du point de bifurcation, des demandes de transaction d'un bloc de bifurcation correct, une par une ; et mettre à jour l'arborescence mondiale d'instantané après la mise à jour d'annulation, selon des données d'écriture dans un résultat d'exécution d'une demande de transaction.

9. Procédé selon la revendication 8, dans lequel l'étape de mise à jour de l'arborescence mondiale d'instantané après la mise à jour d'annulation, selon des données d'écriture dans le résultat d'exécution de la demande de transaction, comprend l'étape ci-dessous consistant à :
mettre à jour, selon les données d'écriture dans le résultat d'exécution de la demande de transaction, l'arborescence mondiale d'instantané après la mise à jour d'annulation, jusqu'à un emplacement du bloc d'instantané le plus récent ou d'un bloc le plus récent, et réserver l'arborescence mondiale d'instantané.

10. Procédé selon l'une quelconque des revendications 1 à 9, comprenant en outre l'étape ci-dessous consistant à :
dans le cadre du processus visant à exécuter les demandes de transaction du bloc en cours, stocker séquentiellement des données des demandes de transaction dans les données locales en unités de blocs.

11. Procédé selon l'une quelconque des revendications 1 à 10, dans lequel, après l'étape de mise à jour de l'arborescence mondiale du bloc d'instantané en cours vers l'arborescence mondiale d'instantané, le procédé comprend en outre l'étape ci-dessous consistant à :
supprimer une arborescence mondiale correspondant à un bloc antérieur au bloc d'instantané en cours.

12. Appareil de stockage de données pour une chaîne de blocs, configuré dans un noeud de chaîne de blocs, dans lequel des données affectées par des demandes de transaction traitées sur la chaîne de blocs sont stockées localement, l'appareil comprenant :
un module de mise à jour d'arborescence mondiale (510), configuré de manière à, dans le cadre d'un processus visant à exécuter des demandes de transaction d'un bloc en cours, mettre à jour une arborescence mondiale de données locales, dans lequel des objets de données sont stockés par l'intermédiaire d'une structure arborescente, conformément à des données d'écriture dans un résultat d'exécution d'une demande de transaction, pour générer un nouveau point de données et une nouvelle racine d'arborescence mondiale, le nouveau point de données étant un point de données d'entité ou un point de données de correctif d'un point de données d'entité existant, dans lequel le point de données d'entité pointe directement vers une valeur réelle d'un objet de données, et le point de données de correctif enregistre une opération de mise à jour basée sur un point de données d'entité existant ;
un module de stockage de racine (520), configuré de manière à stocker la nouvelle racine d'arborescence mondiale correspondant au bloc en cours ; et
un module de mise à jour d'instantané (530), configuré de manière à, en réponse à une détermination selon laquelle un bloc existant devient un bloc d'instantané en cours satisfaisant une condition d'instantané selon une probabilité d'une bifurcation pour le bloc d'instantané en cours, mettre à jour une arborescence mondiale du bloc d'instantané en cours vers une arborescence mondiale d'instantané selon des demandes de transaction entre un bloc d'instantané précédent et le bloc d'instantané en cours, de sorte que des objets de données du bloc d'instantané et de tous les blocs antérieurs au bloc d'instantané sont finalement mis à jour, et dans lequel l'arborescence mondiale de données locales comprend l'arborescence mondiale d'instantané et, pour des blocs postérieurs au bloc d'instantané en cours, une pluralité de racines d'arborescence mondiale comprend de nouveaux points de données de correctif, dans lequel un point de données de l'arborescence mondiale d'instantané est un point de données d'entité qui pointe directement vers une valeur réelle d'un objet de données ; et
dans lequel l'étape consistant à déterminer qu'un bloc existant devient un bloc d'instantané en cours satisfaisant une condition d'instantané selon une probabilité d'une bifurcation pour le bloc d'instantané en cours comprend l'étape ci-dessous consistant à :
déterminer un bloc présentant un intervalle de bloc à partir du bloc d'instantané précédent comme étant le bloc d'instantané en cours conformément à un intervalle de bloc d'instantané défini, l'intervalle de bloc à partir du bloc d'instantané précédent atteignant l'intervalle de bloc d'instantané, l'intervalle de bloc d'instantané étant un intervalle de bifurcation le plus long autorisé par un algorithme de consensus de la chaîne de blocs.

13. Dispositif électronique, comprenant :
au moins un processeur (601) ; et
une mémoire (602), connectée en communication audit au moins un processeur ;
dans lequel la mémoire stocke une instruction exécutable par ledit au moins un processeur, et l'instruction, lorsqu'elle est exécutée par ledit au moins un processeur, amène ledit au moins un processeur à mettre en oeuvre le procédé selon l'une quelconque des revendications 1 à 11.

14. Support de stockage non transitoire lisible par ordinateur, stockant une instruction informatique, dans lequel l'instruction informatique est utilisée pour amener un ordinateur à mettre en oeuvre le procédé selon l'une quelconque des revendications 1 à 11.
